(19) **Europäisches Patentamt**
**European Patent Office**
**Office européen des brevets**

(11) **EP 2 400 320 B1**

(12) **FASCICULE DE BREVET EUROPEEN**

(45) Date de publication et mention
de la délivrance du brevet:
**19.11.2014 Bulletin 2014/47**

(51) Int Cl.:
***G01V 11/00*** *(2006.01)*

(21) Numéro de dépôt: **11290267.1**

(22) Date de dépôt: **10.06.2011**

(54) **Procédé d'exploitation d'un gisement pétrolier à partir d'un modèle de réservoir déformé graduellement au moyen de cosimulations**

Verfahren zur Ausbeutung eines Erdöllagers mit Hilfe eines Reservoir-Modells, das schrittweise durch Co-Simulationen verformt wird

Method for exploiting an oil deposit based on a reservoir model gradually deformed through co-simulations

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.06.2010 FR 1002616**

(43) Date de publication de la demande:
**28.12.2011 Bulletin 2011/52**

(73) Titulaire: **IFP Energies nouvelles**
**92852 Rueil-Malmaison Cedex (FR)**

(72) Inventeurs:
• **Le Ravalec, Mickaele**
**92500 Rueil-Malmaison (FR)**
• **Da Veiga, Sébastien**
**75005 Paris (FR)**

(56) Documents cités:
**FR-A1- 2 869 421      FR-A1- 2 890 453**

• **CAERS J: "Geostatistical History Matching Under Training Image Based Geological Model Constraints", SPE PROCEEDINGS, XX, XX, 29 septembre 2002 (2002-09-29), pages 1-16, XP002404105,**
• **HOFFMAN B T ET AL: "Geostatistical History Matching Using a Regional Probability Perturbation Method", SPE ANNUAL TECHNICAL CONFERENCE AND EXHIBITION, XX, XX, no. 84409, 5 octobre 2003 (2003-10-05), pages 1-14, XP002288861,**
• **DIDIER YU DING ET AL: "History Matching Geostatistical Model Realizations Using a Geometrical Domain Based Parameterization Technique", MATHEMATICAL GEOSCIENCES, SPRINGER-VERLAG, BERLIN/HEIDELBERG, vol. 42, no. 4, 13 avril 2010 (2010-04-13) , pages 413-432, XP019792936, ISSN: 1874-8953**

EP 2 400 320 B1

**Description**

La présente invention concerne le domaine technique de l'industrie pétrolière, et plus particulièrement l'exploitation de réservoirs souterrains, tels que des réservoirs pétroliers ou des sites de stockage de gaz.

En particulier, l'invention permet de modifier une représentation du réservoir, appelée modèle de réservoir, pour la rendre cohérente avec les différentes données collectées sur le terrain.

L'optimisation et l'exploitation des gisements pétroliers reposent sur une description aussi précise que possible de la structure, des propriétés pétrophysiques, des propriétés des fluides, etc., du gisement étudié. Pour ce faire, les spécialistes utilisent un outil qui permet de rendre compte de ces aspects de façon approchée : le modèle de réservoir. Un tel modèle constitue une maquette du sous-sol, représentative à la fois de sa structure et de son comportement. Généralement, ce type de maquette est représenté sur un ordinateur, et l'on parle alors de modèle numérique. Un modèle de réservoir comporte un maillage ou grille, généralement tridimensionnelle, associée à une ou plusieurs cartes de propriétés pétrophysiques (porosité, perméabilité, saturation...). L'association consiste à attribuer des valeurs de ces propriétés pétrophysiques à chacune des mailles de la grille.

Ces modèles bien connus et largement utilisés dans l'industrie pétrolière, permettent de déterminer de nombreux paramètres techniques relatifs à l'étude ou l'exploitation d'un réservoir, d'hydrocarbures par exemple. En effet, puisque le modèle de réservoir est représentatif de la structure du réservoir et de son comportement, l'ingénieur l'utilise par exemple pour déterminer les zones qui ont le plus de chances de contenir des hydrocarbures, les zones dans lesquelles il peut être intéressant/nécessaire de forer un puits d'injection ou de production pour améliorer la récupération des hydrocarbures, le type d'outils à utiliser, les propriétés des fluides utilisés et récupérés.... Ces interprétations de modèles de réservoir en termes de « paramètres techniques d'exploitation » sont bien connues des spécialistes, même si de nouvelles méthodes sont régulièrement développées. De la même façon, la modélisation des sites de stockages de $CO_2$ permet de surveiller ces sites, de détecter des comportements anomaliques et de prédire le déplacement du $CO_2$ injecté.

Un modèle de réservoir a donc pour vocation de rendre compte, au mieux, de toutes les informations connues sur un réservoir. Un modèle de réservoir est représentatif lorsqu'une simulation de réservoir fournit des estimations de données d'historique très proches des données observées. On appelle données d'historique, les données de production issues de mesures aux puits en réponse à la production du réservoir (production d'huile, production d'eau d'un ou plusieurs puits, ratio gaz/huile (GOR), proportion d'eau de production ("water cut"), et/ou les données de sismiques répétitives (impédances sismiques 4D dans une ou plusieurs régions, etc.). Une simulation de réservoir est une technique permettant de simuler les écoulements de fluides au sein d'un réservoir au moyen d'un logiciel appelé simulateur d'écoulement.

Pour ce faire, l'intégration de toutes données disponibles est indispensable. Ces données comprennent en général :

-     des mesures en certains points de la formation géologique, par exemple dans des puits. Ces données sont dites statiques car elles sont invariables dans le temps (à l'échelle des temps de la production du réservoir) et sont directement liées à la propriété d'intérêt.

-     des "données d'historique", comprenant des données de production, par exemple les débits de fluide mesurés aux puits, les concentrations de traceurs et des données issues de campagnes d'acquisition sismique répétées à des temps successifs. Ces données sont dites dynamiques car elles évoluent en cours d'exploitation et sont indirectement liées aux propriétés attribuées aux mailles du modèle de réservoir.

Les techniques d'intégration des données dynamiques (production et/ou sismique 4D) dans un modèle de réservoir sont bien connues des spécialistes : ce sont des techniques dites de "calage d'historique" ("history matching" en anglais).

Le calage d'historique consiste à modifier les paramètres d'un modèle de réservoir, tels que les perméabilités, les porosités ou les skins de puits (représentant les endommagements autour du puits), les connections de failles..., pour minimiser les écarts entre les données d'historique simulées et mesurées. Les paramètres peuvent être liés à des régions géographiques comme les perméabilités ou porosités autour d'un puits ou plusieurs puits. L'écart entre données réelles et données simulées forme une fonctionnelle, dite fonction objectif. Le problème du calage d'historique se résout en minimisant cette fonctionnelle.

De nombreuses techniques ont été développées ces dernières années pour modifier le modèle géologique afin de caler les données d'historique tout en préservant la cohérence de ce modèle vis-à-vis des observations statiques. Les données statiques disponibles sont utilisées pour définir des fonctions aléatoires pour chaque propriété pétrophysique comme la porosité ou la perméabilité. Une représentation de la répartition spatiale d'une propriété pétrophysique est une réalisation d'une fonction aléatoire. De façon générale, une réalisation est générée à partir d'une part d'une moyenne, d'une variance et d'une fonction de covariance qui caractérise la variabilité spatiale de la propriété étudiée et d'autre part d'un germe ou d'une série de nombres aléatoires. De nombreuses techniques de simulation existent comme la méthode de simulation séquentielle Gaussienne, la méthode de Cholesky ou encore la méthode FFT-MA.

- Goovaerts,P., 1997, Geostatistics for natural resources evaluation, Oxford Press, New York, 483 p.

- Le Ravalec, M., Noetinger B., and Hu L.-Y., 2000, The FFT moving average (FFT-MA) generator: an efficient numerical method for generating and conditioning Gaussian simulations, Mathematical Geology, 32(6), 701-723.

Les techniques de perturbation considérées permettent de modifier une réalisation d'une fonction aléatoire tout en assurant le fait que la réalisation perturbée est aussi une réalisation de cette même fonction aléatoire.
Parmi ces techniques de perturbation, on peut citer la méthode des points pilotes développée par RamaRao et al. (1995) et Gomez-Hernandez et al. (1997), la méthode des déformations graduelles proposée par Hu (2000) et la méthode de perturbation des probabilités introduite par Caers (2003). Ces méthodes permettent de modifier la distribution spatiale des hétérogénéités :

- RamaRao, B.S, Lavenue, A.M., Marsilly, G. de, Marietta, M.G., 1995, Pilot point methodology for automated calibration of an ensemble of conditionally simulated transmissivity fields. 1. Theory and computational experiments. WRR, 31 (3), 475-493.

- Gomez-Hernandez, J., Sahuquillo, A., et Capilla, J.E., 1997, Stochastic simulation of transmissivity fields conditional to both transmissivity and piezometric data, 1. Theory, J. of Hydrology, 203, 162-174.

- Hu, L-Y., 2000, Gradual Deformation and iterative calibration of Gaussian-related stochastic models, Math. Geol., 32(1), 87-108.

- Caers, J., 2003, Geostatistical history matching under training-image based geological constraints. SPE J. 8(3), 218-226.

Ainsi, l'objet de l'invention concerne un procédé alternatif pour exploiter un gisement pétrolier à partir d'un modèle de réservoir. Ce procédé alternatif repose sur un calage d'historique dans lequel on déforme graduellement le modèle de réservoir au moyen de cosimulations, ces cosimulations dépendant de coefficients de corrélation qui deviennent alors des paramètres d'ajustement du processus de calage d'historique.

**Le procédé selon l'invention**

L'invention concerne un procédé d'exploitation d'un gisement pétrolier selon un schéma d'exploitation donné défini à partir d'une représentation dudit gisement, ladite représentation comportant un maillage associé à au moins une carte d'une propriété dudit gisement obtenue au moyen d'une simulation stochastique d'une première fonction aléatoire, dans lequel on acquiert des données dynamiques en cours d'exploitation dudit gisement, et l'on modifie ladite carte de façon à minimiser une fonction objectif mesurant une différence entre lesdites données dynamiques et des données dynamiques simulées au moyen de ladite représentation du gisement et d'un simulateur d'écoulement. Le procédé comporte les étapes suivantes :

i. on choisit au moins un coefficient de corrélation entre ladite première fonction aléatoire et au moins une seconde fonction aléatoire de même moyenne et même covariance ;

ii. on modifie ladite carte en réalisant une cosimulation de ladite première fonction aléatoire et d'au moins ladite seconde fonction aléatoire en utilisant ledit coefficient de corrélation ;

iii. on modifie ledit coefficient de corrélation et on réitère l'étape ii), jusqu'à ce que ladite fonction objectif converge vers un minimum ;

iv. on adapte ledit schéma d'exploitation du gisement en tenant compte de ladite carte modifiée ; et

v. on exploite ledit gisement en mettant en oeuvre ledit schéma d'exploitation modifié.

Selon l'invention, on peut choisir un coefficient de corrélation égale à 1 dans des mailles du maillage où l'on ne souhaite pas modifier la carte, et l'on choisit un coefficient de corrélation différent de 1 dans des mailles du maillage où l'on souhaite modifier la carte.

Selon un mode de réalisation, après l'étape iii), on modifie un jeu de nombre aléatoire utilisé pour générer la première carte, puis on réitère le procédé à l'étape ii).

Selon un autre mode de réalisation, la représentation comporte N cartes, N étant un entier strictement supérieur à 1, on choisit N-1 coefficients de corrélation entre la première fonction aléatoire et N-1 autres fonctions aléatoires de même moyenne et même covariance, et on modifie les cartes en réalisant une cosimulation de la première fonction aléatoire et des N-1 autres fonctions aléatoires en utilisant les coefficients de corrélation.

D'autres caractéristiques et avantages du procédé selon l'invention, apparaîtront à la lecture de la description ci-après d'exemples non limitatifs de réalisations, en se référant aux figures annexées et décrites ci-après.

**Présentation succincte des figures**

- la figure 1 illustre le procédé d'exploitation d'un gisement pétrolier selon l'invention.

- la figure 2 illustre un cas d'application de la méthode de perturbation par cosimulation dans le cas d'une perturbation affectant l'ensemble des mailles du modèle géologique.

- la figure 3 illustre un cas d'application de la méthode de perturbation par cosimulation dans le cas d'une perturbation affectant une partie des mailles situées au centre du modèle géologique.

- La figure 4 illustre l'étape de calage d'historique selon la méthode de perturbation par cosimulation.

- la figure 5 représente les réalisations de porosité ($\Phi$), de perméabilité horizontale (Kx) et verticale (Kz) générées pour peupler les cinq couches (C1 à C5) du modèle initial de réservoir.

- la figure 6 représente les réalisations de porosité (en haut), de perméabilité horizontale (au milieu) et verticale (en bas) générées pour peupler les 5 couches du modèle de réservoir obtenu après calage.

- la figure 7 illustre l'évolution de la fonction objectif (qui mesure l'écart entre les données de production réelles et les réponses numériques correspondantes) en fonction du nombre d'itérations.

**Description détaillée du procédé**

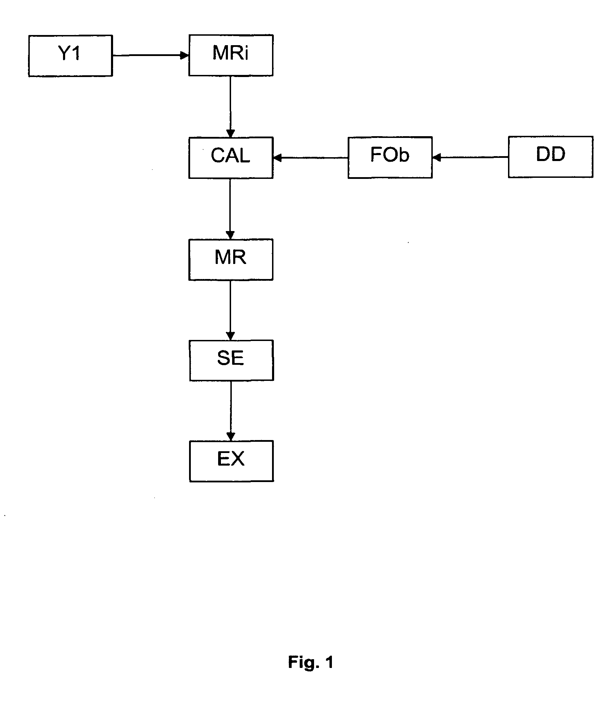

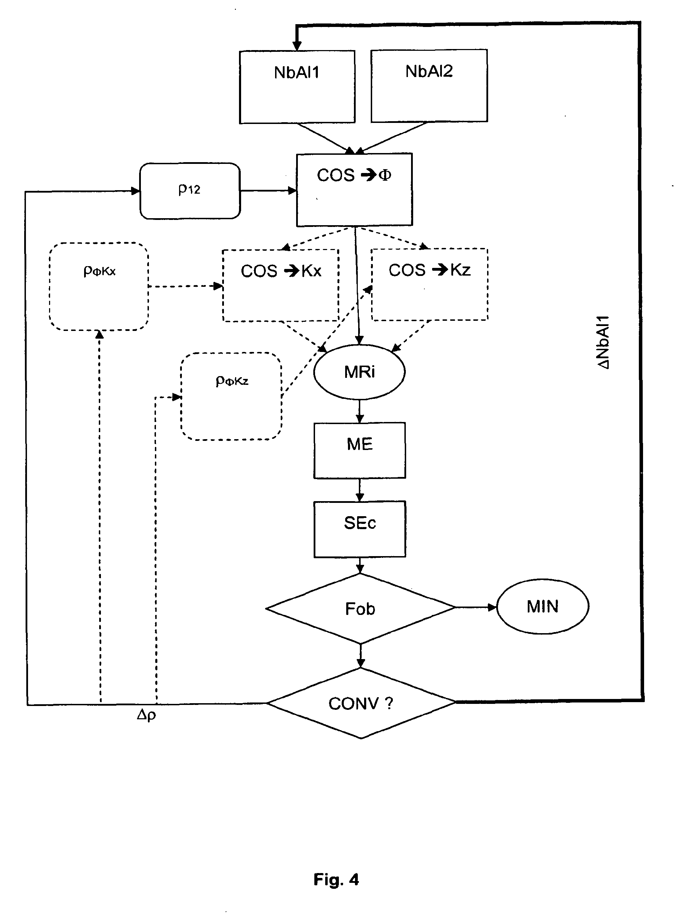

La figure 1 illustre le procédé d'exploitation d'un gisement pétrolier selon l'invention. La figure 4 illustre l'étape de calage d'historique. Le procédé comporte principalement quatre étapes :

1. on génère un modèle de réservoir initial (MRi) à partir d'une première fonction aléatoire (Y1);

2. on acquiert des données dynamiques (DD) en cours d'exploitation du gisement, et l'on définit une fonction objectif (FOb) pour le calage d'historique ;

3. on réalise un calage (CAL) d'historique (figure 4) en réalisant les étapes suivantes :

    i. on choisit un coefficient de corrélation (p12) entre la première fonction aléatoire (Y1) et une seconde fonction aléatoire (Y2) ;

    ii. on modifie le modèle de réservoir en réalisant une cosimulation de la première fonction aléatoire (Y1) et de la seconde fonction aléatoire (Y2) en utilisant le coefficient de corrélation (p12) ;

    iii. on modifie le coefficient de corrélation et on réitère l'étape ii), jusqu'à ce que la fonction objectif converge vers un minimum (MIN) ;

4. on exploite (EX) le gisement selon un schéma d'exploitation (SE) adapté au modèle de réservoir.

## 1- Génération d'un modèle initial de réservoir (MRi)

Les formations géologiques sont en général des milieux très hétérogènes. La modélisation d'un réservoir, c'est-à-dire la construction d'un modèle de réservoir représentatif du réservoir, nécessite de recourir à des procédés de construction dits « probabilistes » du fait de la limitation de l'information disponible (nombre de puits restreint, ...). De ce fait, les modèles géologiques construits à partir de ces procédés probabilistes sont appelés « modèles stochastiques ». La construction d'un modèle stochastique de réservoir doit d'abord dépendre de l'environnement du dépôt géologique, ce qui permet de représenter les hétérogénéités majeures qui contrôlent l'écoulement des fluides. L'intégration des données statiques dans ce modèle passe par des opérations linéaires et peut se faire à partir de techniques géostatistiques bien connues des spécialistes.

Un modèle de réservoir, représenté sur un ordinateur, consiste en une grille à N dimensions (N>0 et en général égale deux ou trois) dont chacune des mailles se voit affecter la valeur d'une propriété caractéristique de la zone étudiée. Il peut s'agir par exemple de la porosité ou de la perméabilité distribuée dans un réservoir. Ces valeurs constituent des cartes. Ainsi un modèle est une grille associée à au moins une carte.

La valeur d'une propriété caractéristique de la zone étudiée est appelée variable régionalisée. Il s'agit d'une variable continue, distribuée dans l'espace, et représentative d'un phénomène physique. Du point de vue mathématique, il s'agit simplement d'une fonction $z(u)$ prenant une valeur en chaque point $u$ (la maille de la grille) d'un domaine d'étude $D$ (la grille représentative du réservoir). Mais la variation de la variable régionalisée dans cet espace est trop irrégulière pour pouvoir être formalisée par une équation mathématique. En fait, la variable régionalisée représentée par $z(u)$ possède à la fois un aspect global, relatif à la structure spatiale du phénomène étudié, et un aspect local aléatoire.

Ce dernier aspect, local aléatoire, peut être modélisé par une variable aléatoire (VA). Une variable aléatoire est une variable qui peut prendre un certain nombre de réalisations $z$ suivant une certaine loi de probabilité. Des variables continues telles que des attributs sismiques (impédance acoustique) ou des propriétés pétrophysiques (saturation, porosité, perméabilité) peuvent être modélisées par des VA. De ce fait, au point $u$, la variable régionalisée $z(u)$ peut être considérée comme la réalisation d'une variable aléatoire $Z$.

Cependant, pour représenter correctement la variabilité spatiale de la variable régionalisée, il faut pouvoir prendre en compte le double aspect, à la fois aléatoire et structuré. Une des approches possibles, de type probabiliste, fait appel à la notion de fonction aléatoire. Une fonction aléatoire (FA) est un ensemble de variables aléatoires (VA) définies sur un domaine d'étude $D$ (la grille représentative du réservoir), c'est-à-dire $\{Z(u), u * D\}$, également noté $Z(u)$. Ainsi tout groupe de valeurs échantillonnées $\{z(u1),...,z(un)\}$ peut être considéré comme une réalisation particulière de la fonction aléatoire $Z(u) = \{Z(u1),...,Z(un)\}$. La FA $Z(u)$ permet de prendre en compte à la fois l'aspect localement aléatoire (en $u*$, la variable régionalisée $z(u*)$ étant une VA) et l'aspect structuré (via la loi de probabilité spatiale associée à la FA $Z(u)$).

Les réalisations d'une fonction aléatoire fournissent des modèles stochastiques de réservoir. A partir de tels modèles, il est possible d'apprécier le mode de fonctionnement de la zone souterraine étudiée. Par exemple, la simulation des écoulements dans un milieu poreux représenté par des modèles stochastiques numériques, permet entre autre, de prédire la production du réservoir et ainsi d'optimiser son exploitation en testant différents scenarii.

Le modèle de réservoir constitue une représentation du gisement. Il comporte un maillage associé à au moins une carte d'une propriété caractéristique du gisement. Cette carte est obtenue au moyen d'une simulation stochastique d'une première fonction aléatoire. Cette dernière étape peut être décrite de la façon suivante :

- Tout d'abord, on mesure sur le terrain d'une part, des données statiques (diagraphies, mesures sur des échantillons prélevés dans les puits, sismique...).

- Puis, à partir des données statiques, on définit une fonction aléatoire, caractérisée par sa fonction de covariance (ou de façon analogue par son variogramme), sa variance et sa moyenne.

- Par ailleurs, on définit un ensemble de nombres aléatoires tirés indépendamment les uns des autres : il peut s'agir, par exemple, d'un bruit blanc Gaussien ou de nombres uniformes. Il existe donc un nombre aléatoire indépendant par maille et par réalisation.

- Enfin, à partir d'un simulateur géostatistique choisi, et du jeu de nombres aléatoires, un tirage aléatoire dans la fonction aléatoire est effectué, donnant accès à une réalisation (continue ou discrète) représentant une image possible du réservoir. Classiquement, le tirage aléatoire est fait dans un cadre hiérarchique. En premier lieu, le modèle de réservoir est peuplé aléatoirement par une réalisation de la fonction aléatoire associée aux faciès, conditionnellement aux mesures de faciès effectuées ponctuellement. Puis, la porosité est générée aléatoirement sur chacun des faciès, conditionnellement aux données de porosité obtenues sur le faciès considéré. Ensuite, on simule la perméabilité horizontale selon sa fonction aléatoire associée, conditionnellement aux faciès et aux porosités tirées précédemment, ainsi qu'aux mesures de perméabilité effectuées sur le terrain. Enfin, on peuple le modèle de réservoir par une réalisation aléatoire de la perméabilité verticale conditionnellement à toutes les simulations précédentes et aux données de perméabilité obtenues ponctuellement.

**2- Acquisition de données dynamiques** (DD)

A ce stade, les données dynamiques n'ont pas été considérées pour construire le modèle de réservoir. On acquiert donc des données dynamiques en cours d'exploitation du gisement. Il s'agit de données de production, d'essais de puits, de temps de percée, de sismique 4D... dont la particularité est de varier au cours du temps en fonction des écoulements de fluide dans le réservoir

Cette étape est réalisée au moyen d'outils de mesure tels des débitmètres ou des campagnes sismiques.

Ces données dynamiques vont ensuite être intégrées dans le modèle de réservoir par le biais d'une optimisation (calage d'historique). On définit donc une fonction objectif mesurant l'écart entre les données dynamiques mesurées sur le terrain et les réponses correspondantes simulées pour le modèle considéré. Le but du processus d'optimisation est de modifier petit à petit ce modèle pour réduire la fonction objectif.

**3- Calage d'historique** (CAL)

On modifie la carte (associée au modèle de réservoir) de façon à minimiser la fonction objectif mesurant la différence entre les données dynamiques et les données dynamiques simulées au moyen de la représentation du gisement (modèle de réservoir). Cette étape est réalisée au moyen d'un ordinateur sur lequel fonctionne un logiciel technique appelé simulateur d'écoulement. Ce logiciel permet de simuler les données dynamiques à partir de la représentation du gisement.

La méthode selon l'invention utilise la technique de la cosimulation. Cosimuler consiste à simuler de façon jointe $N$ réalisations de $N$ fonctions aléatoires de moyennes $m_i$, $i=1,N$, et de fonctions de covariance $C_i$, $i=1,N$, en tenant compte des coefficients de corrélation $\rho_{i,j}$ entre les fonctions aléatoires i et j. Ces coefficients prennent des valeurs entre -1 et 1. Les principes de la cosimulation sont expliqués entre autres dans les documents suivants :

- Goovaerts,P., 1997, Geostatistics for natural resources evaluation, Oxford Press, New York, 483 p.

- Anderson, T.W., 1984, An introduction to multivariate statistical analysis, John Wiley & Sons, New York, 675 p.

La méthode comporte les étapes suivantes:

i. on choisit un coefficient de corrélation (p12) entre la première fonction aléatoire (Y1) et une seconde fonction aléatoire (Y2) ;

ii. on modifie le modèle de réservoir en réalisant une cosimulation de la première fonction aléatoire (Y1) et de la seconde fonction aléatoire (Y2) en utilisant le coefficient de corrélation (ρ12) ;

iii. on modifie le coefficient de corrélation et on réitère l'étape ii), jusqu'à ce que la fonction objectif converge vers un minimum (MIN) ;

Principe de la méthode de perturbation par cosimulation

On considère la simulation de deux fonctions aléatoires corrélées $Y_{i=1,2}$, représentatives par exemple de la porosité, avec les mêmes moyenne m et covariance C. Soit $y_1$ une réalisation de $Y_1$ : il s'agit de la réalisation initiale de porosité.

On cherche alors à simuler une autre réalisation de porosité $y_2$ de $Y_2$ sachant $y_1$. Le coefficient de corrélation linéaire entre ces deux réalisations est $\rho_{12}$. De fait, la covariance croisée vaut $C_{12} = \rho_{12}C$. Dans ce cas, on peut montrer que la moyenne et la covariance de $Y_2$ sachant $Y_1$ valent :

$$m_{2|1} = m + \rho_{12}(Y_1 - m) \quad \text{et} \quad C_{2|1} = \left(1 - \rho_{12}^2\right)C$$

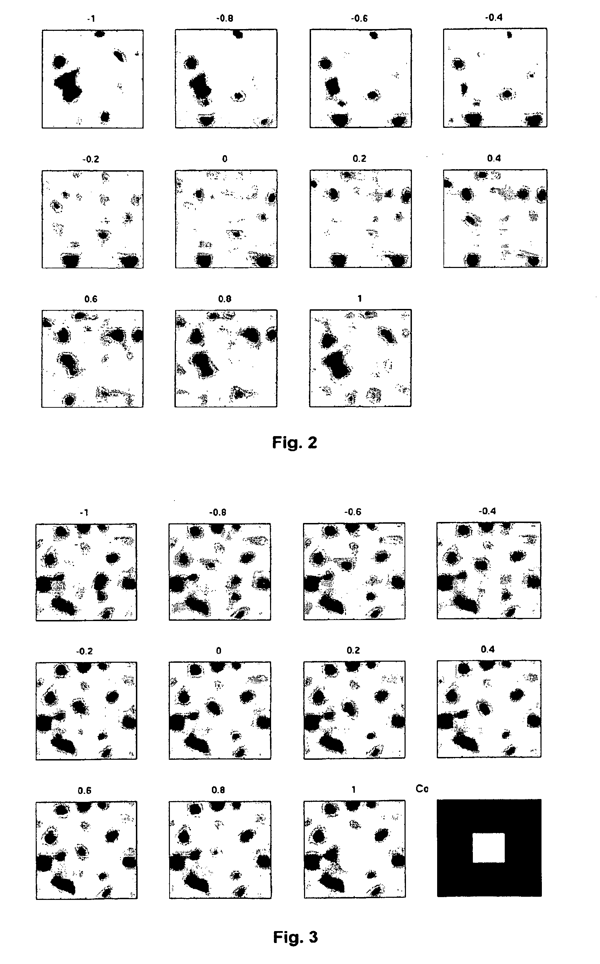

Les moyenne et covariance conditionnelles étant connues, on peut utiliser des algorithmes de simulation stochastique standards pour générer la réalisation $y_2$. Si on modifie continûment le coefficient de corrélation entre -1 to 1 tout en gardant les mêmes germes, on obtient une chaîne continue de réalisations $y_2(\rho_{12})$ (figure 2). La figure 2 montre des réalisations de porosité y2 générée à partir de la loi de probabilité de Y2 sachant Y1 en augmentant le coefficient de corrélation de -1 à 1. La réalisation de porosité initiale y1 correspond à un coefficient de corrélation de 1. Quand $\rho_{12}$ vaut 1, $y_2$ est identique à la réalisation initiale $y_1$ Quand il vaut 0, $y_2$ est indépendant de $y_1$. Quand il vaut -1, $y_2$ est l'image inversée de $y_1$.

### 4- Exploitation du gisement selon un schéma d'exploitation adapté (EX - SE)

A partir d'un tel modèle de réservoir calé avec les données dynamiques, les spécialistes définissent un schéma d'exploitation (emplacement des puits producteur, injecteur,...).
On exploite alors le gisement selon ce schéma d'exploitation adapté au modèle de réservoir issu du calage d'historique.

### Variantes

Perturbations locales

La méthode de perturbation par cosimulation selon l'invention, peut être étendue au cas d'une perturbation locale, en considérant le coefficient de corrélation $\rho_{12}$ comme une fonction plutôt que comme un scalaire : il vaut 1 dans les mailles du modèle qui ne doivent par être modifiées et n'importe quelle autre valeur entre -1 et 1 dans les mailles qui doivent être modifiées.
En outre, pour assurer la continuité de la réalisation de porosité même après une perturbation locale, le principe de cosimulation est appliqué au niveau des nombres aléatoires utilisés pour générer les réalisations de porosité plutôt qu'au niveau des réalisations de porosité elles-mêmes. La procédure consiste à présent à simuler $Z_1$ et ensuite $Z_2$ sachant $Z_1$, avec $Z_1$ et $Z_2$ deux fonctions aléatoires de moyenne nulle et de fonction de covariance identité. Soient $z_1$ et $z_2$ deux réalisations de $Z_1$ et $Z_2$. $Z_1$ est le jeu de nombres aléatoires utilisé pour générer la réalisation de porosité initiale $y_1$. Comme précédemment, le coefficient de corrélation entre $z_1$ et $z_2$ est noté $\rho_{12}$. Les moyenne et covariance de $Z_2$ sachant $Z_1$ deviennent alors :

$$m_{2|1} = \rho_{12}z_1 \quad \text{et} \quad C_{2|1} = \left(1 - \rho_{12}^2\right)I$$

Les moyenne et covariance conditionnelles étant connues, on peut générer $z_2$,

$$z_2 = \rho_{12}z_1 + \sqrt{1 - \rho_{12}^2}\, z_1^{(2)}$$

$z_1^{(2)}$ est un jeu de nombres aléatoires indépendant de $z_1$. $z_2$ peut ensuite être utilisé comme jeu de nombres aléatoires pour générer la réalisation de porosité $y_2$. Si on modifie continûment le coefficient de corrélation entre -1 to 1 dans la zone où on veut une modification, tout en gardant ce coefficient égal à 1 dans le reste du modèle et qu'on garde les mêmes jeux de nombres aléatoires, on obtient une chaîne continue de réalisations $y_2(\rho_{12})$, comme l'illustre la figure 3. Sur cette figure, l'image en bas à droite représente la valeur du coefficient de corrélation affecté à chaque maille : en gris, le coefficient vaut 1, et il n'y a donc aucune modification, en noir le coefficient est différent de 1 et il y a donc une déformation de l'image.

Perturbation de *N* réalisations

La méthode de perturbation par cosimulation peut aussi être étendue au cas de la cosimulation de *N* réalisations corrélées. On revient alors aux formules explicitées précédemment. Elles peuvent être utilisées de façon récursive pour calculer $m_{3|2}$ et $C_{3|2}$ et donc $z_3$ et $y_3$, puis $m_{4|3}$ et $C_{4|3}$ et donc $z_4$ et $y_4$, *etc*. De façon plus générale, on montre qu'à l'itération *N*, on a:

$$m_{N|N-1} = \prod_{i=1}^{N-1} \rho_{i,i+1} z_1 + \sum_{k=2}^{N-1}\left( \sqrt{1-\rho_{k-1,k}^2}\prod_{i=k}^{N-1} \rho_{i,i+1} z_1^{(k)} \right)$$

$$C_{N|N-1} = \left(1-\rho_{N-1,N}^2\right)I$$

$$z_N = \prod_{i=1}^{N-1} \rho_{i,i+1} z_1 + \sum_{k=2}^{N-1}\left( \sqrt{1-\rho_{k-1,k}^2}\prod_{i=k}^{N-1} \rho_{i,i+1} z_1^{(k)} \right) + \sqrt{\left(1-\rho_{N-1,N}^2\right)} z_1^{(N)}$$

Les $\rho_{i,i+1}$ sont les coefficients de corrélation entre les réalisations de porosité i et i+1. Ce sont autant de paramètres qui peuvent être ajustés pendant le processus de calage pour construire un modèle géologique respectant les données dynamiques.

La méthode de perturbation par cosimulation a été introduite par rapport à des réalisations de porosité ; elle s'applique de la même manière à des réalisations de perméabilité ou de saturation initiale, ou de toute autre propriété caractéristique du réservoir.

**Exemple d'application**

Pour illustrer la méthode, on décrit un cas d'application élaboré dans le cadre du projet européen "Production forecasting with UNcertainty Quantification" à partir d'un réservoir pétrolier réel. Ce cas est souvent utilisé pour apprécier les nouvelles méthodes de calage. Le champ contient de l'huile et du gaz. Il est produit à partir de 6 puits producteurs localisés près de la ligne de contact entre l'huile et le gaz. L'historique de production comporte : 1 an avec des essais de puits, 3 ans pendant lesquels les puits sont fermés, et 4 ans de production. Au cours de ces 8 années, des données de pression (BHFP), de rapport volumique gaz/huile (GOR) et de quantité relative d'eau produite (W CUT) sont collectées dans les puits. La distribution des porosités et perméabilités dans le réservoir est inconnue.

Il s'agit alors de construire en utilisant la méthode de perturbation par cosimulation un modèle géologique reproduisant ces données, c'est-à-dire une grille 3D avec des valeurs de porosité et perméabilité attribuées à chaque maille. L'organisation des différentes étapes de la méthode est illustrée par la figure 4.

*Etape 1 : initialisation*

On génère deux jeux de nombres aléatoires (NbAl1, NbAl2). On considère un coefficient de corrélation ($\rho_{12}$) pour la porosité valant initialement 1. En outre, on détermine un coefficient de corrélation ($\rho_{\Phi Kx}$) entre la porosité et la perméabilité horizontale et un autre ($\rho_{\Phi Kz}$) entre la porosité et la perméabilité verticale à partir des mesures de porosité et perméabilité disponibles. Par exemple, on se réfère à des mesures effectuées en laboratoire sur des échantillons de roches prélevés dans des puits.

*Etape 2 : construction d'un modèle de réservoir initial*

On commence par générer un modèle de réservoir initial (MRi), qui prend en compte différents aspects tels que la structure géologique, les propriétés pétrophysiques, les propriétés fluides, les puits, etc. Ce modèle est une grille 3D. Puisque les porosités et perméabilités sont inconnues, on génère aléatoirement d'abord des réalisations de porosité, puis des réalisations de perméabilité horizontale et verticales pour peupler les mailles. Les réalisations de perméabilité et de porosité sont corrélées : cette corrélation se traduit par un coefficient de corrélation.

On génère tout d'abord une première réalisation de porosité à partir du premier jeu de nombres aléatoires. Puis, on cosimule (COS) une réalisation de porosité à partir du deuxième jeu de nombres aléatoires sachant la porosité initiale. On obtient la réalisation initiale de porosité ($\Phi$) quand le coefficient de corrélation vaut 1. On considère ensuite les deux autres coefficients de corrélation. On cosimule (COS) alors une réalisation pour la perméabilité horizontale (Kx) et une autre pour la perméabilité verticale (Kz) sachant la porosité. En variant les coefficients de corrélation, on obtient de nouvelles valeurs pour les porosités et perméabilités. Comme on cherche à déterminer ces dernières, les coefficients de corrélation vont être traités dans la suite comme des paramètres d'ajustement.

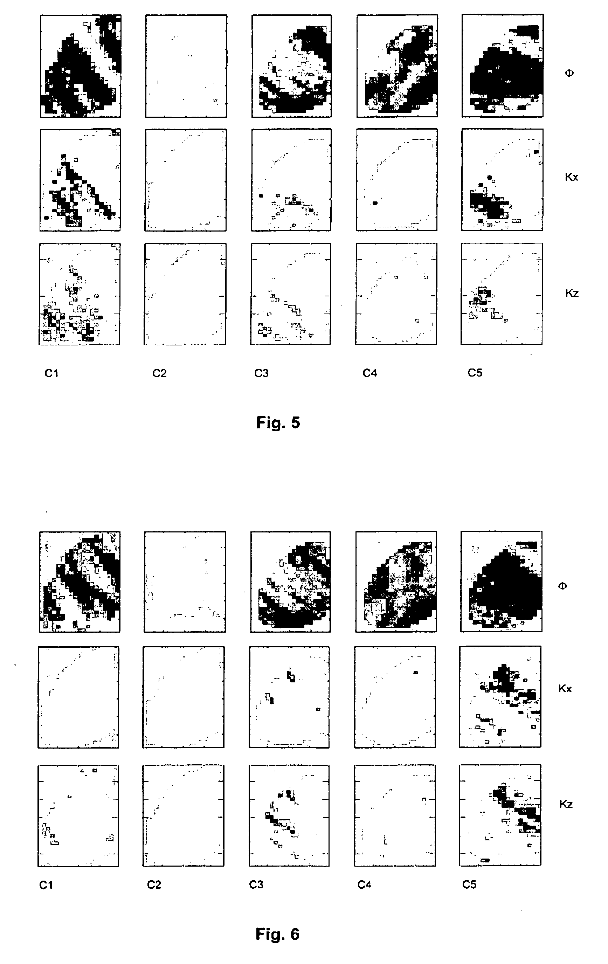

Le modèle de réservoir initial constitue le point de départ du processus de calage : la figure 5 représente des réalisations de porosité ($\Phi$), de perméabilité horizontale (Kx) et verticale (Kz) générées pour peupler les cinq couches (C1 à C5) du modèle initial de réservoir.

*Etape 3 : Mise à l'échelle (ME)*

Lorsque le modèle de réservoir comporte un trop grand nombre de mailles, il est mis à l'échelle. On en déduit un réservoir plus grossier avec un nombre réduit de mailles. Cette étape permet de réduire les temps de calcul requis par l'étape suivante.

*Etape 4 : Simulation d'écoulement (SEc)*

On reproduit par simulation le schéma de production du réservoir pétrolier. On obtient ainsi la réponse en production associée au modèle de réservoir considéré.

*Etape 5 : Comparaison des réponses simulées et des données de production (FOb)*

La réponse numérique issue du simulateur d'écoulement est comparée aux données de production réelles (dans l'exemple considéré, il s'agit des pressions, des rapports des volumes produits gaz/huile et quantité relative d'eau produite) mesurées sur le champ : l'écart entre les données et les résultats de la simulation est mesuré par une fonction, appelée fonction objectif. Si cette fonction est très petite (MIN), le modèle de réservoir est considéré comme fiable et conservé pour planifier la gestion future du champ. Dans le cas contraire, il faut modifier les valeurs de porosité et perméabilité attribuées aux mailles du modèle. En d'autres termes, il faut modifier ($\Delta p$) les valeurs des coefficients de corrélation jusqu'à ce que la fonction objectif soit suffisamment petite. Dans l'exemple considéré, le modèle de réservoir comprend 5 couches indépendantes les unes des autres. Pour chacune d'entre elles, on perturbe les porosités et perméabilités à partir de 3 coefficients de corrélation. Le calage des données de production est donc réalisé en ajustant 15 paramètres. A ce stade, on modifie les 15 coefficients de corrélation et on revient à l'étape 2.

*Etape 6 : Répétition du processus de calage*

Le processus de cosimulation pour la porosité dépend de 2 jeux de nombres aléatoires. De fait, en modifiant le coefficient de corrélation attaché à la réalisation de porosité, on se restreint à une portion très réduite de l'espace de recherche. On peut donc alors ne pas être dans de bonnes conditions pour identifier un modèle de réservoir minimisant l'écart entre les données de production réelles et les réponses numériques correspondantes. Pour palier cette difficulté, on se donne la possibilité d'explorer d'autres parties de l'espace de recherche : lorsque l'étape 5 ne permet pas de converger (CONV) vers une valeur minimale de la fonction objectif, on utilise les coefficients de corrélation déterminés à ce stade pour mettre à jour ($\Delta NbAl1$) le premier jeu de nombres aléatoires. On en génère aussi un autre au hasard. Puis, on revient à l'étape 2. Cette étape cesse d'être répétée lorsque la fonction objective est assez basse ou lorsque le nombre d'itérations réalisées excède un nombre maximal autorisé par l'utilisateur.

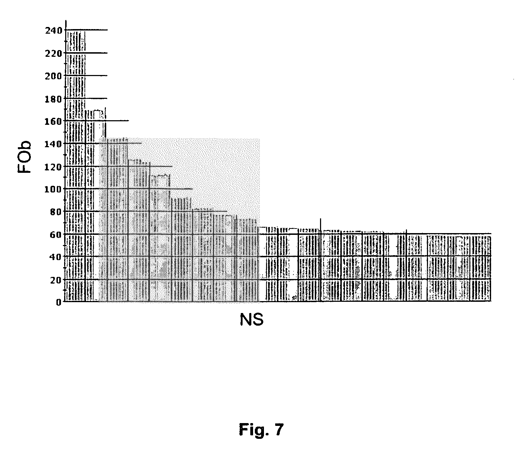

Le modèle de réservoir déterminé à la fin du processus de calage est illustré sur la figure 6. Les réponses en production obtenues pour ce modèle permettent de vérifier que l'écart entre les données réelles et les données simulées a fortement diminué. L'évolution de la fonction objectif (FOb) est représentée sur la figure 7 en fonction du nombre de simulations (NS) d'écoulement réalisées : elle passe de 238 à 56.

**Revendications**

1. Procédé d'exploitation d'un gisement pétrolier selon un schéma d'exploitation donné défini à partir d'une représentation dudit gisement, ladite représentation comportant un maillage associé à au moins une carte d'une propriété dudit gisement obtenue au moyen d'une simulation stochastique d'une première fonction aléatoire, dans lequel on acquiert des données dynamiques en cours d'exploitation dudit gisement, et l'on modifie ladite carte de façon à minimiser une fonction objectif mesurant une différence entre lesdites données dynamiques et des données dynamiques simulées au moyen de ladite représentation du gisement et d'un simulateur d'écoulement, **caractérisé en ce que** l'on réalise les étapes suivantes :

   i. on choisit au moins un coefficient de corrélation entre ladite première fonction aléatoire et au moins une seconde fonction aléatoire de même moyenne et même covariance ;
   ii. on modifie ladite carte en réalisant une cosimulation de ladite première fonction aléatoire et d'au moins ladite seconde fonction aléatoire en utilisant ledit coefficient de corrélation ;
   iii. on modifie ledit coefficient de corrélation et on réitère l'étape ii), jusqu'à ce que ladite fonction objectif converge vers un minimum ;

iv. on adapte ledit schéma d'exploitation du gisement en tenant compte de ladite carte modifiée ; et

v. on exploite ledit gisement en mettant en oeuvre ledit schéma d'exploitation modifié.

2. Procédé selon la revendication 1, dans lequel on choisit un coefficient de corrélation égale à 1 dans des mailles dudit maillage où l'on ne souhaite pas modifier la carte, et l'on choisit un coefficient de corrélation différent de 1 dans des mailles dudit maillage où l'on souhaite modifier la carte.

3. Procédé selon la revendication 1, dans lequel, après l'étape iii), on modifie un jeu de nombre aléatoire utilisé pour générer ladite première carte, puis on réitère le procédé à l'étape ii).

4. Procédé selon la revendication 1, dans lequel ladite représentation comporte N cartes, N étant un entier strictement supérieur à 1, on choisit N-1 coefficients de corrélation entre ladite première fonction aléatoire et N-1 autres fonctions aléatoires de même moyenne et même covariance, et on modifie lesdites cartes en réalisant une cosimulation de ladite première fonction aléatoire et des N-1 autres fonctions aléatoires en utilisant lesdits coefficients de corrélation.

**Patentansprüche**

1. Verfahren zur Förderung eines Erdölvorkommens gemäß einem gegebenen Förderungsschema, das ausgehend von einer Darstellung des Vorkommens definiert wird, wobei die Darstellung ein Gitternetz umfasst, das mindestens einer Karte einer Eigenschaft des Vorkommens zugehörig ist, die mittels einer stochastischen Simulation einer ersten Zufallsfunktion erhalten wird, in der dynamische Daten im Laufe der Förderung des Vorkommens erfasst werden, und die Karte derart geändert wird, dass eine Zielfunktion minimiert wird, die eine Differenz zwischen den dynamischen Daten und dynamischen Daten misst, die mittels der Darstellung des Vorkommens und eines Strömungssimulators simuliert werden, **dadurch gekennzeichnet, dass** es die folgenden Schritte ausführt:

i. Auswählen von mindestens einem Korrelationskoeffizienten zwischen der ersten Zufallsfunktion und mindestens einer zweiten Zufallsfunktion mit demselben Durchschnitt und derselben Kovarianz;

ii. Ändern der Karte durch Ausführen einer Kosimulation der ersten Zufallsfunktion und mindestens der zweiten Zufallsfunktion unter Verwendung des Korrelationskoeffizienten;

iii. Ändern des Korrelationskoeffizienten und Wiederholen des Schritts ii) bis die Zielfunktion gegen ein Minimum konvergiert;

iv. Anpassen des Förderungsschemas des Vorkommens unter Berücksichtigung der geänderten Karte; und

v. Förderung des Vorkommens unter Einsatz des geänderten Förderungsschemas.

2. Verfahren nach Anspruch 1, wobei ein Korrelationskoeffizient gleich 1 in Maschen des Gitternetzes ausgewählt wird, wo keine Änderung der Karte gewünscht wird, und ein Korrelationskoeffizient, der sich von 1 unterscheidet, in Maschen des Gitternetzes ausgewählt wird, wo eine Änderung der Karte gewünscht wird.

3. Verfahren nach Anspruch 1, wobei nach dem Schritt iii) eine Menge mit Zufallszahl verändert wird, die zum Erzeugen der ersten Karte verwendet wird, und dann das Verfahren am Schritt ii) wiederholt wird.

4. Verfahren nach Anspruch 1, wobei die Darstellung N Karten umfasst, wobei N eine Ganzzahl ist, die strikt größer als 1 ist, N-1 Korrelationskoeffizienten unter der ersten Zufallsfunktion und N-1 anderen Zufallsfunktionen mit demselben Durchschnitt und derselben Kovarianz ausgewählt werden und die Karten durch Ausführen einer Kosimulation der ersten Zufallsfunktion und der N-1 anderen Zufallsfunktionen unter Verwendung der Korrelationskoeffizienten geändert werden.

**Claims**

1. A method of developing a petroleum reservoir according to a given development scheme defined from a representation of said reservoir, said representation comprising a grid associated with at least one map of a property of said reservoir obtained by means of a stochastic simulation of a first random function, wherein dynamic data are acquired during the development of said reservoir and said map is modified so as to minimize an objective function measuring a difference between said dynamic data and dynamic data simulated by means of said reservoir representation and of a flow simulator, **characterized in that** it comprises the following stages:

i. selecting at least one correlation coefficient between said first random function and at least a second random function of equal mean and covariance,

ii. modifying said map by carrying out a cosimulation of said first random function and of at least said second random function using said correlation coefficient,

iii. modifying said correlation coefficient and repeating stage ii) until said objective function converges to a minimum,

iv. adapting said reservoir development scheme by taking account of said modified map, and

v. developing said reservoir using said modified development scheme.

2. A method as claimed in claim 1, wherein a correlation coefficient equal to 1 is selected in cells of said grid where the map is not to be modified and a correlation coefficient different from 1 is selected in cells of said grid where the map is to be modified.

3. A method as claimed in claim 1 wherein, after stage iii), a random set of numbers used to generate said first map is modified, then the method is repeated from stage ii).

4. A method as claimed in claim 1, wherein said representation comprises N maps, N being an integer strictly greater than 1, N-1 correlation coefficients are selected between said first random function and N-1 other random functions of equal mean and covariance, and said maps are modified by carrying out a cosimulation of said first random function and of the N-1 other random functions using said correlation coefficients.

**Fig. 1**

EP 2 400 320 B1

Fig. 2

Fig. 3

13

**Fig. 4**

Fig. 5

Fig. 6

**Fig. 7**

**EP 2 400 320 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **GOOVAERTS,P.** Geostatistics for natural resources evaluation. Oxford Press, 1997, 483
- **LE RAVALEC, M. ; NOETINGER B. ; HU L.-Y.** The FFT moving average (FFT-MA) generator: an efficient numerical method for generating and conditioning Gaussian simulations. *Mathematical Geology,* 2000, vol. 32 (6), 701-723
- **RAMARAO, B.S ; LAVENUE, A.M. ; MARSILLY, G. DE ; MARIETTA, M.G.** Pilot point methodology for automated calibration of an ensemble of conditionally simulated transmissivity fields. 1. Theory and computational experiments. *WRR,* 1995, vol. 31 (3), 475-493
- **GOMEZ-HERNANDEZ, J. ; SAHUQUILLO, A. ; CAPILLA, J.E.** Stochastic simulation of transmissivity fields conditional to both transmissivity and piezometric data, 1. *Theory, J. of Hydrology,* 1997, vol. 203, 162-174
- **HU, L-Y.** Gradual Deformation and iterative calibration of Gaussian-related stochastic models. *Math. Geol.,* 2000, vol. 32 (1), 87-108
- **CAERS, J.** Geostatistical history matching under training-image based geological constraints. *SPE J.,* 2003, vol. 8 (3), 218-226
- **ANDERSON, T.W.** An introduction to multivariate statistical analysis. John Wiley & Sons, 1984, 675